# EUROPEAN PATENT APPLICATION

(11) **EP 4 783 297 A1**
(43) Date of publication of application: **29.07.2026**
(21) Application number: 26153450.7
(22) Date of filing: 22.01.2026
(51) Int. Cl.: H01M 10/48, H01M 50/342

(54) **SECONDARY BATTERY AND GAS PRESSURE EVALUATION SYSTEM FOR SECONDARY BATTERY**

(30) Priority: 24.01.2025 KR 20250011344
(71) Applicant: SAMSUNG SDI CO., LTD., Yongin-si, Gyeonggi-do 17084 (KR)
(72) Inventor: Jeon, Seokhyeon, 16678 Suwon-si, Gyeonggi-do (KR)
(74) Representative: Meissner Bolte Partnerschaft mbB

(57) **Abstract**

A secondary battery includes an electrode assembly including a first electrode, a second electrode, and a separator interposed between the first electrode and the second electrode, a case accommodating the electrode assembly therein, the case having an opened surface, a cap plate sealing the opened surface of the case, a sensor connection portion located on the cap plate, the sensor connection portion configured to be connected to an external gas pressure measurement sensor, and a first vent portion located inside the sensor connection portion.

## Description

### Background

### Field

The present invention relates to a secondary battery and a gas pressure evaluation system for the secondary battery.

### Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In a secondary battery, gas may be generated inside the secondary battery during charging and discharging processes due to decomposition of an electrolyte, occurrence of side reactions at an electrode, and the like. Gas generated inside the secondary battery during charging and discharging may increase the internal pressure of the secondary battery, which may affect the performance and safety of the secondary battery. For example, if the internal gas pressure of the secondary battery becomes greater than a certain critical value, dangerous situations such as expansion of the secondary battery, electrolyte leakage, or an explosion of the secondary battery may occur. Accordingly, precisely measuring and analyzing the internal gas pressure of the secondary battery is essential for improving the stability and lifespan of the secondary battery.

In this regard, the internal gas pressure of the secondary battery may be evaluated based on the internal pressure of the secondary battery in an initial state, that is, immediately after manufacture or before use. However, in the process of connecting a gas pressure measurement sensor to the secondary battery in the initial state, the internal pressure and atmospheric pressure reach equilibrium causing the initial gas composition inside the secondary battery to change, and as a result the actual internal gas pressure in the initial state cannot be measured.

The above information disclosed in this Background section is for enhancement of understanding of the present invention, and therefore, it may contain information that does not constitute related (or prior) art.

### SUMMARY

The technical problem to be solved by the present invention is to provide a secondary battery and a gas pressure evaluation system for the secondary battery to solve the above-described problems.

However, the technical problem to be solved by the present invention is not limited to the problem described above, and other problems, aspects, and features of the present invention not mentioned herein will be clearly understood by those skilled in the art from the description of the present invention below.

According to the present invention, a secondary battery includes an electrode assembly including a first electrode, a second electrode, and a separator interposed between the first electrode and the second electrode, a case accommodating the electrode assembly therein, the case having an opened surface, a cap plate sealing the opened surface of the case, a sensor connection portion located on the cap plate, the sensor connection portion configured to be connected to an external gas pressure measurement sensor, and a first vent portion located inside the sensor connection portion.

According to an embodiment of the present invention, the sensor connection portion may penetrate the cap plate and the sensor connection portion may extend from at least an upper region of the cap plate to a lower region of the cap plate.

According to an embodiment of the present invention, the first vent portion may be located at the upper region of the cap plate inside the sensor connection portion.

According to an embodiment of the present invention, the first vent portion may be located at the lower region of the cap plate inside the sensor connection portion.

According to an embodiment of the present invention, the first vent portion may be located at a region corresponding to the cap plate inside the sensor connection portion.

According to an embodiment of the present invention, the secondary battery may further include a first electrode terminal located on the cap plate, the first electrode terminal connected to the first electrode, and a second electrode terminal located on the cap plate, the second electrode terminal connected to the second electrode, and the sensor connection portion may be located between the first electrode terminal and the second electrode terminal.

According to an embodiment of the present invention, the secondary battery may further include a second vent portion located, on the cap plate, between the first electrode terminal and the second electrode terminal, and the sensor connection portion may be located between either: a) the second vent portion and the first electrode terminal, or b) between the second vent portion and the second electrode terminal.

According to an embodiment of the present invention, the secondary battery may further include an electrolyte inlet located on the cap plate either 1) between the first electrode terminal and the second vent portion or 2) between the second electrode terminal and the second vent portion, and the sensor connection portion may be located on the opposite side of the electrolyte inlet relative to the second vent portion.

According to an embodiment of the present invention, a shape of the outermost boundary of the first vent portion may be any one of a circle, an ellipse, or a polygon.

According to an embodiment of the present invention, the first vent portion may include a first notch extending in a first direction, and a second notch extending in a second direction substantially perpendicular to the first direction, wherein the first notch and the second notch may intersect each other. A notch, as described herein, is a cut or weakened portion within the vent portion which, upon reaching a predetermined level of pressure, can move, thereby allowing gas to flow and pressure to be reduced.

According to an embodiment of the present invention, the first vent portion may further include a third notch extending in a third direction, the third direction being between the first direction and the second direction, and a fourth notch extending in a fourth direction, the fourth direction being between the first direction and the second direction, wherein the fourth direction may be located on the opposite side of the third direction with respect to the first direction and the second direction.

According to an embodiment of the present invention, the first vent portion may further include a fifth notch having a shape corresponding to the shape of the first vent portion, the fifth notch being smaller than or equal to the outermost boundary of the first vent portion, and a sixth notch crossing the interior of the fifth notch.

According to an embodiment of the present invention, the first vent portion may include a seventh notch extending in an arbitrary direction, the seventh notch spaced apart from the outermost boundary of the first vent portion, and an eighth notch extending from at least one end of the seventh notch in a direction toward any one or a plurality of arbitrary points of the outermost boundary of the first vent portion.

According to an embodiment of the present invention, the secondary battery may further include a second vent portion located on the cap plate, and a fracture pressure of the first vent portion may be lower than a fracture pressure of the second vent portion.

According to an embodiment of the present invention, the fracture pressure of the first vent portion may be greater than 0 and less than or equal to 0.1 kgf/cm².

According to an embodiment of the present invention, a gas pressure evaluation system for the secondary battery may include a secondary battery, a charger-discharger configured to charge and discharge the secondary battery, and a gas pressure measurement sensor configured to measure gas pressure of the secondary battery from outside the secondary battery. The secondary battery may include an electrode assembly including a first electrode, a second electrode, and a separator interposed between the first electrode and the second electrode, a case accommodating the electrode assembly therein, the case having an opened surface, a cap plate sealing the open surface of the case, a sensor connection portion located on the cap plate, the sensor connection portion configured to be connected to the gas pressure measurement sensor, and a first vent portion located inside the sensor connection portion.

According to an embodiment of the present invention, the sensor connection portion may penetrate the cap plate and may extend from at least an upper region of the cap plate to a lower region of the cap plate.

According to an embodiment of the present invention, the first vent portion may be located at the upper region of the cap plate inside the sensor connection portion.

According to an embodiment of the present invention, the first vent portion may be located at the lower region of the cap plate inside the sensor connection portion.

According to an embodiment of the present invention, the first vent portion may be located at a region corresponding to the cap plate inside the sensor connection portion.

According to some embodiments of the present invention, in the process of connecting a gas pressure measurement sensor to the sensor connection portion of the secondary battery, it is possible to prevent the internal gas pressure of the secondary battery and atmospheric pressure from reaching equilibrium. Accordingly, the internal gas pressure of the secondary battery in an initial state may be accurately measured.

According to some embodiments of the present invention, in the process of connecting a gas pressure measurement sensor to the sensor connection portion of the secondary battery, a change in the internal gas composition of the secondary battery in the initial state or occurrence of side reactions due to the change in the gas composition may be prevented.

However, aspects and features of the present invention are not limited to those described above, and other aspects and features not mentioned will be clearly understood by a person skilled in the art from the detailed description described below.

### BRIEF DESCRIPTION OF DRAWINGS

The following drawings attached to the present specification illustrate embodiments of the present invention and further describe aspects and features of the present invention together with the detailed description of the present invention. Thus, the present invention should not be construed as being limited to the drawings:
FIG. 1 is a perspective view illustrating an example of a secondary battery according to an embodiment of the present invention.
FIG. 2 is a side view illustrating an example of the secondary battery and a pressure measurement sensor according to an embodiment of the present invention and a longitudinal cross-sectional view of some embodiments of a sensor connection portion.
FIG. 3 is a graph illustrating example results of gas pressure evaluation of the secondary battery.
FIG. 4 is a graph illustrating examples of gas pressure of a normal cell and an abnormal cell during a gas pressure evaluation process of the secondary battery.
FIG. 5 is a plan view illustrating an example of a first vent portion according to an embodiment of the present invention.
FIG. 6 is a plan view illustrating an example of a first vent portion according to an embodiment of the present invention.
FIG. 7 is a plan view illustrating an example of a first vent portion according to an embodiment of the present invention.
FIG. 8 is a plan view illustrating an example of a first vent portion according to an embodiment of the present invention.
FIG. 9 is a plan view illustrating an example of a first vent portion according to an embodiment of the present invention.

### DETAILED DESCRIPTION

Hereinafter, embodiments of the present invention will be described, in detail, with reference to the accompanying drawings. The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked," or "connected" to each other, or another component may be "interposed" between the components."

Throughout the specification, when "A and/or B" is stated, it means A, B or A and B, unless otherwise stated. That is, "and/or" includes any or all combinations of a plurality of items enumerated. When "C to D" is stated, it means C or greater than or equal to and D or less than or equal to, unless otherwise specified.

The terms used in this specification are for the purpose of describing embodiments of the present invention and are not intended to limit the present invention.

In the present invention, layers and regions shown in the drawings may have sizes or relative sizes that are exaggerated for clarity of explanation. That is, the sizes shown in the drawings are only for convenience of understanding and are not limiting. Further, the same reference numerals throughout the entire specification may refer to the same components.

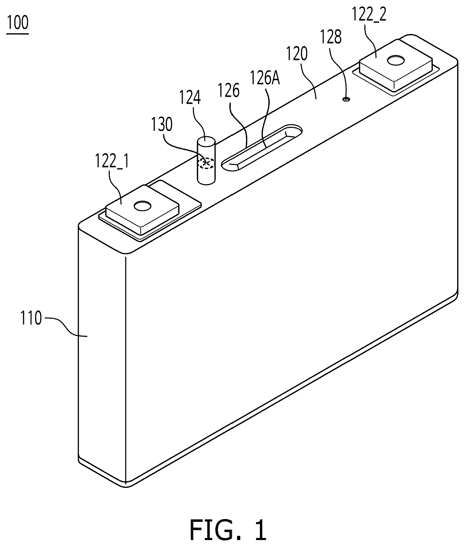

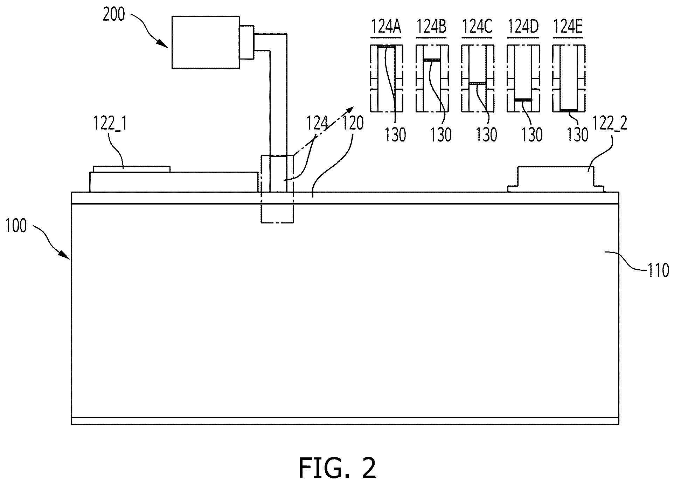

FIG. 1 is a perspective view illustrating an example of a secondary battery according to an embodiment of the present invention. FIG. 2 is an example of a side view of the secondary battery and a pressure measurement sensor 200 according to an embodiment of the present invention, and longitudinal cross-sectional views of a sensor connection portion 124 according to some embodiments. In FIG. 2, for convenience of explanation, the cross-sectional views 124A to 124E of the sensor connection portion 124 are illustrated together with a part of a cap plate 120.

Hereinafter, a description will be given of an example in which a secondary battery 100 is a prismatic secondary battery, but the shape/type of the secondary battery is not limited thereto, and the secondary battery 100 may, for example, be a prismatic, cylindrical, pouch, pin, or coin-type battery.

Referring to FIGS. 1 and 2, the secondary battery 100 according to an embodiment of the present invention may include an electrode assembly, a case 110, a cap plate 120, a sensor connection portion 124 configured to be connected to an external gas pressure measurement sensor 200, and a first vent portion 130 located inside the sensor connection portion 124.

The electrode assembly may include a first electrode, a second electrode, and a separator interposed between the first electrode and the second electrode.

An electrode assembly may be formed by winding or stacking a stack of a first electrode plate, a separator, and a second electrode plate, each formed as a thin plate or film. When the electrode assembly is wound, the winding axis may be parallel to the longitudinal direction (e.g., the y direction) of the case. In other embodiments, the electrode assembly may be a stacked type rather than a wound type, and the shape of the electrode assembly is not limited in the present invention. In addition, the electrode assembly may be a Z-stack electrode assembly in which a positive electrode plate and a negative electrode plate are placed on both sides of a separator, and then bent to form a Z-stack. Further, one or more electrode assemblies may be stacked with long sides adjacent to each other and accommodated in the case, and the number of electrode assemblies in the case is not limited in the present invention. The first electrode plate of the electrode assembly may function as a negative electrode, and the second electrode plate may function as a positive electrode. Of course, the opposite arrangement is also possible.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion), which is a region to which the first electrode active material is not applied. The first electrode tab may function as a current flow path between the first electrode plate and the first current collector. In some embodiments, when the first electrode plate is manufactured, the first electrode tab may be cut in advance to protrude to one side of the electrode assembly, or it may protrude to one side of the electrode assembly beyond the separator without being separately cut.

The second electrode plate may be formed by applying a second electrode active material, such as a transition metal oxide, to a second electrode current collector formed of a metal foil, such as aluminum or an aluminum alloy. The second electrode plate may include a second electrode tab (e.g., a second uncoated portion), which is a region to which the second electrode active material is not applied. The second electrode tab may function as a current flow path between the second electrode plate and the second current collector. In some embodiments, when the second electrode plate is manufactured, the second electrode tab may be cut in advance to protrude to the other side of the electrode assembly, or it may protrude to the other side of the electrode assembly beyond the separator without being separately cut.

In some embodiments, the first electrode tab may be located on a left side of the electrode assembly, and the second electrode tab may be located on a right side of the electrode assembly. In other embodiments, both the first electrode tab and the second electrode tab may be located on one side of the electrode assembly in the same direction. For convenience of explanation, the left and right sides are defined based on the orientation of the secondary battery 100 shown in FIG. 1, and these positions may change when the secondary battery 100 is rotated left/right or up/down.

For a positive electrode active material a compound capable of reversibly intercalating/deintercalating lithium (for example, a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiaA1-bXbO2-cDc (0.90≤a≤1.8, 0≤b≤0.5, 0≤c≤0.05); LiaMn2-bXbO4-cDc (0.90≤a≤1.8, 0≤b≤0.5, 0≤c≤0.05); LiaNi1-b-cCobXcO2-αDα (0.90≤a≤1.8, 0≤b≤0.5, 0≤c≤0.5, 0<α<2); LiaNi1-b-cMnbXcO2-αDα (0.90≤a≤1.8, 0≤b≤0.5, 0≤c≤0.5, 0<α<2); LiaNibCocL1dGeO2 (0.90≤a≤1.8, 0≤b≤0.9, 0≤c≤0.5, 0≤d≤0.5, 0≤e≤0.1); LiaNiGbO2 (0.90≤a≤1.8, 0.001≤b≤0.1); LiaCoGbO2 (0.90≤a≤1.8, 0.001≤b≤0.1); LiaMn1-bGbO2 (0.90≤a≤1.8, 0.001≤b≤0.1); LiaMn2GbO4 (0.90≤a≤1.8, 0.001≤b≤0.1); LiaMn1-gGgPO4 (0.90≤a≤1.8, 0≤g≤0.5); Li(3-f)Fe2(PO4)3 (0≤f≤2); and LiaFePO4 (0.90≤a≤1.8).

In the above formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may be formed from a positive electrode active material and may further include a binder and/or a conductive material.

The content of the positive electrode active material may range from about 90 wt% to about 99.5 wt% based on 100 wt% of the positive electrode active material layer, and the content of the binder and the conductive material may be about 0.5 wt% to about 5 wt%, respectively, based on 100 wt% of the positive electrode active material layer.

The current collector may be aluminum (Al), but is not limited thereto.

The negative electrode active material may be formed from a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of crystalline carbon may include graphite such as natural graphite or artificial graphite, and examples of amorphous carbon may include soft carbon, hard carbon, pitch carbide, mesophase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0<x<2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and a silicon particle, and an amorphous carbon coating layer on the surface of the core.

A negative electrode for a lithium secondary battery may include a current collector and a negative electrode active material layer located on the current collector. The negative electrode active material layer may be formed from a negative electrode active material and may further include a binder and/or a conductive material.

For example, the negative electrode active material layer may be formed from about 90 wt% to about 99 wt% of the negative electrode active material, about 0.5 wt% to about 5 wt% of the binder, and about 0 wt% to about 5 wt% of the conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, a conductive metal-coated polymer substrate, and combinations thereof may be used.

An electrolyte for a lithium secondary battery may be formed from a non-aqueous organic solvent and a lithium salt.

The non-aqueous organic solvent serves as a medium through which ions involved in electrochemical reactions of the battery can move.

The non-aqueous organic solvent may be a carbonate-based, an ester-based, an ether-based, a ketone-based, or an alcohol-based solvent, or an aprotic solvent, and may be used alone or in combination of two or more.

In addition, when a carbonate-based solvent is used, a mixture of a cyclic carbonate and a chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and combinations thereof, but is not limited thereto.

The organic material and the inorganic material may be mixed in one coating layer, or may be in the form of a coating layer containing an organic material and a coating layer containing an inorganic material laminated on each other.

The electrode assembly may have a first electrode tab of the first electrode and a second electrode tab of the second electrode disposed at both side ends thereof, respectively. The electrode assembly may have a first current collecting portion and a second current collecting portion welded and connected respectively to the first electrode tab and the second electrode tab of the first electrode and the second electrode, which protrude on both sides.

As another example, the first electrode tab of the first electrode and the second electrode tab of the second electrode may both be disposed on one side end of the electrode assembly. The electrode assembly may have a first current collecting portion and a second current collecting portion welded and connected respectively to the first electrode tab and the second electrode tab of the first electrode and the second electrode, which protrude on one side.

The case 110 may provide a space to accommodate the electrode assembly therein and may have an opened surface, the case 100 forming an external shape of the secondary battery 100. The case 110 may be formed in various shapes such as a prismatic shape, a cylindrical shape, or a pouch shape. The case 110 may be formed of a conductive metal such as aluminum, an aluminum alloy, steel plated with nickel, or of a laminate film or plastic that forms a pouch.

Once the electrode assembly is accommodated within the case 110, the cap plate 120 may seal closed the opened surface of the case 110. The cap plate 120 may have a plate-shaped structure. The cap plate 120 may be formed of a conductive metal such as aluminum, an aluminum alloy, or steel plated with nickel.

The sensor connection portion 124 may be located on the cap plate 120 and configured to be connected to an external gas pressure measurement sensor 200. The sensor connection portion 124 may act as an interface or port (port) that modifies the sealing structure of the secondary battery 100 so that an external gas pressure measurement sensor 200 can be connected. The sensor connection portion 124 may function as a port to deliver gas inside the secondary battery 100 to the connected gas pressure measurement sensor 200.

The sensor connection portion 124 may be cylindrical, but is not limited thereto, and may have various shapes to be connectable to the gas pressure measurement sensor 200. For example, the sensor connection portion 124 may be in the shape of a rectangular prism.

The gas pressure measurement sensor 200 may be used to measure the internal pressure of the secondary battery 100 to evaluate the state of gas accumulation inside the secondary battery or the safety of the secondary battery. The gas pressure measurement sensor 200 may be used to precisely monitor the state of the secondary battery 100 at a research and development stage, or may be used for quality control in a large-scale production line. As shown in FIG. 2, the gas pressure measurement sensor 200 may be connected to the sensor connection portion 124 in the form of a pipe (e.g., a cylinder), but is not limited thereto and may be connected in a variety of shapes.

The gas pressure measurement sensor 200 may measure the internal pressure of the secondary battery 100 indirectly from the outside of the secondary battery 100 using a pressure sensor. The pressure sensor may be, for example, a piezoresistive sensor that measures pressure via changes in resistance value caused by mechanical pressure, or a capacitive sensor that measures capacitance changes according to pressure, but is not limited thereto. Any pressure sensor capable of measuring the internal gas pressure of the secondary battery 100 may be adopted.

In an embodiment, as shown in FIG. 1 and in the cross-sectional views 124A to 124E of the sensor connection portion of FIG. 2, the sensor connection portion 124 may penetrate the cap plate 120, and may extend from an upper region of the cap plate 120 (i.e., a region above the cap plate 120) to a lower region of the cap plate 120 (i.e., a region below the cap plate 120). Alternatively, the sensor connection portion 124 may penetrate the cap plate 120 and may extend from an upper region of the cap plate 120 to the cap plate 120 itself (e.g., a surface of the cap plate 120). Alternatively, the sensor connection portion 124 may penetrate the cap plate 120 and may extend from the cap plate 120 (e.g., a surface of the cap plate 120) to a lower region of the cap plate 120. That is, the shape of the sensor connection portion 124 may be variously implemented and is not limited thereto.

A cap capable of being opened and closed may be located at an outer end surface of the sensor connection portion 124. By opening the cap of the sensor connection portion 124, the gas pressure measurement sensor 200 may be connected to the opened outer end surface. Alternatively, the outer end surface of the sensor connection portion 124 may already be open. In that case, the gas pressure measurement sensor 200 may be directly connected to the outer end surface of the sensor connection portion 124.

In an embodiment, the secondary battery 100 may further include a first electrode terminal 122_1 and a second electrode terminal 122_2 located on the cap plate 120. The first electrode terminal 122_1 may be connected to the first electrode of the electrode assembly through the first current collecting portion and/or the first electrode tab, and the second electrode terminal 122_2 may be connected to the second electrode of the electrode assembly through the second current collecting portion and/or the second electrode tab. For example, the first electrode tab connected to the first electrode of the electrode assembly may be connected to the first electrode terminal. Alternatively, the first electrode tab may be connected to a first current collecting portion coupled by welding to a first uncoated portion.

As a result, the first electrode of the electrode assembly may be electrically connected to the first electrode terminal 122_1, and the second electrode of the electrode assembly may be electrically connected to the second electrode terminal 122_2. The first electrode terminal 122_1 may be a negative terminal, and the second electrode terminal 122_2 may be a positive terminal. Alternatively, the first electrode terminal 122_1 may be a positive terminal, and the second electrode terminal 122_2 may be a negative terminal.

In an embodiment, the first electrode terminal 122_1 and the second electrode terminal 122_2 may be coupled to the cap plate 120 (or may penetrate the cap plate 120) and may protrude outward from an upper surface of the cap plate 120. The first electrode terminal 122_1 and the second electrode terminal 122_2 may protrude from the outer surface of the cap plate 120 at the same height. The first electrode terminal 122_1 and the second electrode terminal 122_2 protruding outward from the cap plate 120 may have a rivet structure and be rivet-coupled or welded to the cap plate 120.

In an embodiment, the sensor connection portion 124 may be located between the first electrode terminal 122_1 and the second electrode terminal 122_2.

In an embodiment, the secondary battery 100 may further include a second vent portion 126 located on the cap plate 120 between the first electrode terminal 122_1 and the second electrode terminal 122_2. The second vent portion 126 may be inserted into a vent hole penetrating the cap plate 120 or may form part of the cap plate 120 as a portion of an upper surface of the cap plate 120.

The second vent portion 126 may have a notch (126A) configured to induce breaking (i.e., a fracture) of the second vent portion 126 when an internal pressure of the secondary battery 100 (e.g., an internal gas pressure) exceeds a designed critical value. When an event such as thermal runaway occurs in the secondary battery 100 and the internal pressure (or internal gas pressure) in the case 110 rises, the second vent portion 126 may be broken. Accordingly, the gas in the case 110 may be discharged to the outside of the secondary battery 100.

In an embodiment, the secondary battery 100 may further include an electrolyte inlet 128 may be located on the cap plate 120 between the first electrode terminal 122_1 and the second vent portion 126 or between the second electrode terminal 122_2 and the second vent portion 126. The electrolyte inlet 128 may be an inlet for injecting an electrolyte into the case 110 and may be sealed with a cap that is capable of being opened and closed.

In an embodiment, the sensor connection portion 124 may be located between the second vent portion 126 and the first electrode terminal 122_1 or between the second vent portion 126 and the second electrode terminal 122_2. In that case, the sensor connection portion 124 may be located on an opposite side of the second vent portion 126 with respect to the electrolyte inlet 128. For example, as shown in FIG. 1, when the electrolyte inlet 128 is located between the second vent portion 126 and the second electrode terminal 122_2, the sensor connection portion 124 may be located between the second vent portion 126 and the first electrode terminal 122_1.

Referring to FIGS. 1 and 2, the first vent portion 130 may be located inside the sensor connection portion 124. The first vent portion 130 may function, inside the sensor connection portion 124, as a boundary that separates the inside and the outside of the secondary battery 100. According to an embodiment of the present invention, the first vent portion 130 may be located substantially parallel to the cap plate 120 inside the sensor connection portion 124.

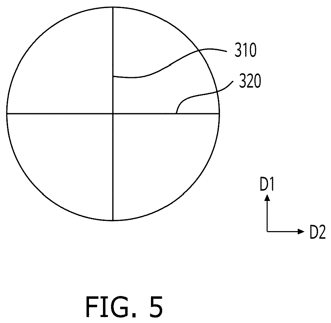

A notch for inducing fracture may be located at the first vent portion 130. Examples of the first vent portion 130 are described below with reference to FIGS. 5-9.

According to some embodiments, as shown in cross-sectional views 124A and 124B of the sensor connection portion in FIG. 2, the first vent portion 130 may be located at the upper region of the cap plate 120 (e.g., a region above the cap plate 120) inside the sensor connection portion 124. For example, the first vent portion 130 may be located at the top end surface of the sensor connection portion 124 (see 124A). Alternatively, the first vent portion 130 may be located between the top end surface of the sensor connection portion 124 and the transverse cross-sectional plane at the same height as the cap plate 120 (see 124B).

According to some embodiments, as shown in the cross-sectional view 124C of the sensor connection portion in FIG. 2, the first vent portion 130 may be located at a region corresponding to the cap plate 120 inside the sensor connection portion 124. The region corresponding to the cap plate 120 inside the sensor connection portion 124 may be a region that is at the same height as the cap plate 120 within the interior of the sensor connection portion 124.

According to some embodiments, as shown in cross-sectional views 124D and 124E of the sensor connection portion in FIG. 2, the first vent portion 130 may be located at the lower region of the cap plate 120 (e.g., a region below the cap plate 120) inside the sensor connection portion 124. For example, the first vent portion 130 may be located at the bottom end surface of the sensor connection portion 124 (see 124E). Alternatively, the first vent portion 130 may be located between the bottom end surface of the sensor connection portion 124 and the transverse cross-sectional plane at the same height as the cap plate 120 (see 124D).

The closer the first vent portion 130 is located to the bottom side inside the sensor connection portion 124, the closer it is to the electrode assembly being charged or discharged, so that the internal gas pressure may affect the first vent portion 130 more directly. For example, as the first vent portion 130 is located closer to the bottom side in the sensor connection portion 124, the breaking (fracture) of the first vent portion 130 may occur more quickly. In other words, if the shape of the outermost boundary of the first vent portion 130, the shape of the notch, etc. are the same, simply adjusting the location of the first vent portion 130 inside the sensor connection portion 124 can adjust the fracture pressure of the first vent portion 130, thereby increasing design flexibility for the secondary battery.

With reference to FIGS. 1 and 2 as described above, the secondary battery 100 is a top terminal type secondary battery in which the first electrode terminal and the second electrode terminal 122_1, 122_2 are located on a single cap plate 120. However, the present invention is not limited thereto. Although not shown, the secondary battery may be a side terminal type secondary battery, including a case having opposite sides open and a first cap plate and a second cap plate respectively sealing the open opposite sides of the case, in which the first electrode terminal is located on the first cap plate, and the second electrode terminal is located on the second cap plate.

In a side terminal type secondary battery, the second vent portion may be located on one surface of the case. Specifically, in a case having opposing long sidewalls and opposing short sidewalls (i.e., a rectangular case), the second vent portion may be located on one short sidewall. In that case, the sensor connection portion may be located on one surface of the case on which the first cap plate, the second cap plate, or the second vent portion is located. The first vent portion may be located inside the sensor connection portion. By connecting a gas pressure measurement sensor to the sensor connection portion, the internal gas pressure of the side terminal type secondary battery may be measured.

The secondary battery 100 may be a lithium secondary battery or a sodium secondary battery. However, the scope of the present invention is not limited thereto, and the secondary battery 100 may include all batteries that can repeatedly supply electricity through charging and discharging. In an embodiment, when the secondary battery 100 is a lithium secondary battery, it may be used in an electric vehicle (EV) because of its excellent lifespan characteristics and high-rate characteristics. For example, it may be used in a plug-in hybrid electric vehicle (PHEV) or another hybrid vehicle. In addition, the lithium secondary battery may be used in fields requiring storage of a large amount of power. For example, it may be used in electric bicycles, electric power tools, or energy storage systems (ESS).

In an embodiment, the secondary battery 100 may be a secondary battery for gas pressure evaluation. As described above, by connecting the gas pressure measurement sensor 200 to the sensor connection portion 124, the secondary battery 100 may be used to evaluate the internal gas pressure of the secondary battery 100.

According to an embodiment of the present invention, a gas pressure evaluation system for the secondary battery may include a secondary battery, a charger-discharger for charging and discharging the secondary battery, and a gas pressure measurement sensor for measuring the gas pressure of the secondary battery from outside the secondary battery.

The secondary battery may include an electrode assembly including a first electrode, a second electrode, and a separator interposed between the first electrode and the second electrode, a case accommodating the electrode assembly therein and having a surface opened, a cap plate sealing the opened surface of the case, a sensor connection portion located on the cap plate and configured to be connected to the gas pressure measurement sensor, and a first vent portion located inside the sensor connection portion. Each component of the secondary battery is as described above with reference to FIGS. 1 and 2.

The charger-discharger that charges and discharges the secondary battery may be connected to the first electrode terminal and the second electrode terminal. According to an embodiment, the charger-discharger may include a current/voltage control device, a battery connection portion, a data collection and control system, and a protection device.

The current/voltage control device may precisely control the current and voltage required by the battery so that charging and discharging of the battery proceed uniformly. Various charging/discharging profiles such as CC-CV (Constant Current-Constant Voltage), CCCV, etc., may be performed through the current/voltage control device. The battery connection portion is a portion connecting the output terminal of the charger-discharger to the first electrode terminal and the second electrode terminal, and the battery connection portion may be a clamp type or socket type, but is not limited thereto. Any form that can maintain reliability under high current and high voltage conditions and has a robust structure may be adopted.

The data collection and control system collects and stores data such as current, voltage, and temperature in real time during charging and discharging, and may perform charging and discharging accurately based on the collected information. The data collection and control system may further include a control interface for controlling the charger-discharger and setting profiles. Using data collected by the data collection and control system, it is possible to analyze the charging/discharging efficiency, capacity, energy density, and deterioration state of the battery.

The protection device is a component that performs protection functions against overvoltage, overcurrent, and overtemperature of the battery, and may, for example, cut off current via a fuse or relay, or may be linked with a Battery Management System (BMS).

The gas pressure measurement sensor that measures the gas pressure of the secondary battery from outside the secondary battery is as described above with reference to FIGS. 1 and 2.

In a gas pressure evaluation system for the secondary battery according to an embodiment, evaluation of the gas pressure of the secondary battery may be conducted as follows. After setting the conditions (current, voltage, etc.) of the charger-discharger, charging and discharging may be performed. Then, the gas pressure measurement sensor may measure the internal gas pressure in an initial state or during charging/discharging, and the changes in internal gas pressure of the secondary battery may be measured, e.g., in real time. Then, the measured data may be transmitted to the charger-discharger or a separate data collection system.

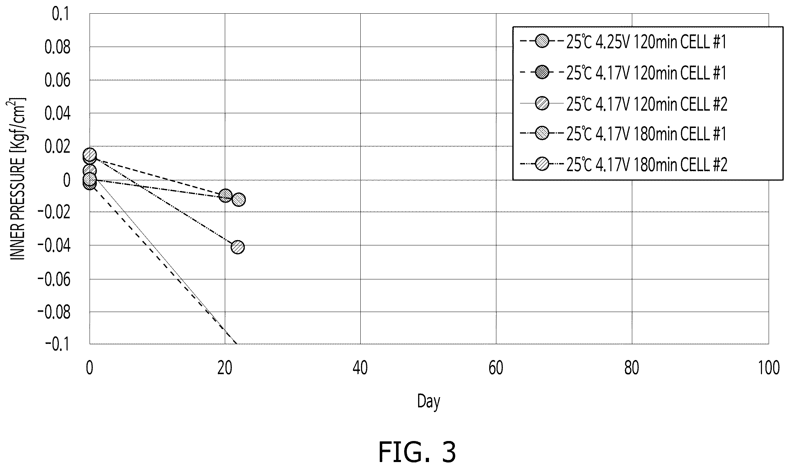

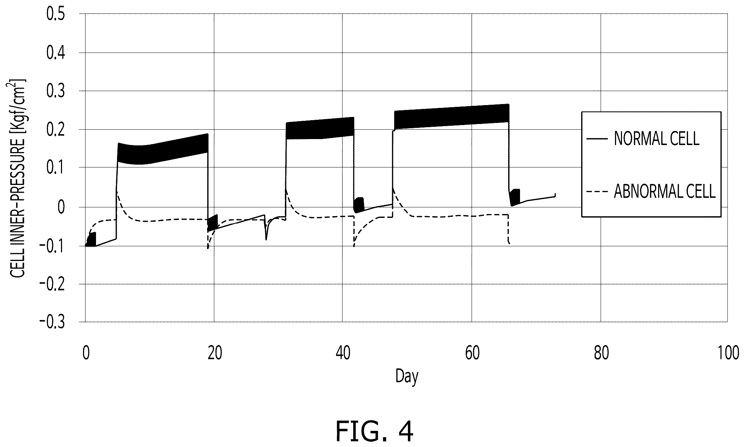

FIG. 3 is a graph illustrating example results of gas pressure evaluation of a secondary battery. FIG. 4 is a graph illustrating examples of gas pressure of a normal cell and an abnormal cell over days in a gas pressure evaluation process of the secondary battery.

FIG. 3 is a graph illustrating example internal gas pressure (Inner Pressure, in Kgf/cm²) measurements over a storage period (illustrated in Days) for five prismatic cells of the same model. The internal gas pressure of the cells is measured relative to atmospheric pressure. The measurements for all five cells were performed at 25°C, with a charging voltage of 4.25 V or 4.17 V, and a charging time of 120 minutes or 180 minutes. The pressure at which gas is released from the second vent portion of each of the five cells was the same, at 7 ± 1 kgf/cm².

Referring to FIG. 3, it was confirmed that even cells of the same model exhibited different initial internal gas pressures. This may indicate that the internal sealing of some cells was not maintained properly while connecting the gas pressure measurement sensor for evaluation. In other words, at the moment the gas pressure measurement sensor is connected, the internal pressure of the cell and the external atmospheric pressure reach equilibrium, making it difficult to accurately measure the internal gas pressure of the cell in an initial state (BOL, Beginning Of Life). Moreover, due to the connection of the gas pressure measurement sensor, the internal gas composition of the cell may mix with the outside atmosphere, increasing the likelihood of side reactions occurring differently from the actual initial state (BOL) conditions.

FIG. 4 is a graph illustrating how the internal gas pressure of a normal cell and an abnormal cell changes over days during charging/discharging cycles. An abnormal cell may be defined as a cell in which internal gas leaks due to the connection of the gas pressure measurement sensor to the sensor connection portion, and a normal cell may be defined as a cell in which no leakage occurs. In both the normal cell and the abnormal cell, the pressure at which gas is released from the second vent portion was the same, at 10 ± 1 kgf/cm².

Referring to FIG. 4, for the normal cell, as the charging/discharging cycle proceeds, the internal gas pressure periodically increases and then decreases in a stable manner, and the maximum value of the internal gas pressure is maintained at about 0.2 kgf/cm². Even when the cycle is repeated, it remains relatively stable. This indicates that the processes of gas generation and gas consumption inside the cell during charging/discharging are balanced and that there is no leakage.

On the other hand, for the abnormal cell, the internal gas pressure periodically decreases as the charging/discharging cycle proceeds. This indicates that gas is leaking from the inside of the cell to the outside.

As illustrated in FIG. 3, there is a problem that even for cells of the same model, there may be difficulty in accurately measuring the internal gas pressure in the initial state, due to the connection of the gas pressure measurement sensor. As illustrated in FIG. 4, even a minor leakage can prevent normal progress of the charging/discharging cycle.

However, as described above with reference to FIGS. 1 and 2, when the first vent portion is installed inside the sensor connection portion, these problems can be resolved. Because of the first vent portion, the cell can remain fully sealed while connecting the gas pressure measurement sensor, and if the first vent portion is designed to be breakable (fracturable) at a relatively low relative pressure, the internal gas pressure of the cell can be measured. For example, as illustrated in FIGS. 3 and 4, the fracture pressure of the first vent portion may be designed to be about 0.1 kgf/cm².

FIG. 5 is a plan view illustrating an example of a first vent portion according to an embodiment of the present invention.

In some embodiments, the shape of the outermost boundary of the first vent portion (for example, 130 in FIG. 2) may be any one of a circle, an ellipse, or a polygon. According to the shape of the outermost boundary of the first vent portion, the shape of the sensor connection portion (for example, 124 in FIG. 1) may also differ. For instance, if the outermost boundary of the first vent portion is a rectangle, the sensor connection portion may be a rectangular prism. This enables complete sealing of the cell via the first vent portion when connecting the gas pressure measurement sensor.

Referring to FIG. 5, for convenience of description, an example is provided in which the shape of the outermost boundary of the first vent portion is circular or elliptical, but it is not limited thereto, and other shapes are within the scope of this invention.

In an embodiment, the first vent portion may include notches. Specifically, the first vent portion may include a first notch 310 extending in a first direction (D1) and a second notch 320 extending in a second direction (D2) perpendicular to the first direction (D1). In this case, the first notch 310 and the second notch 320 may intersect each other. Accordingly, the shape of the notches may be a cross shape, but is not limited thereto. In other words, the second direction (D2) may not necessarily be perpendicular to the first direction (D1), and thus the first notch 310 and the second notch 320 may intersect at an acute angle.

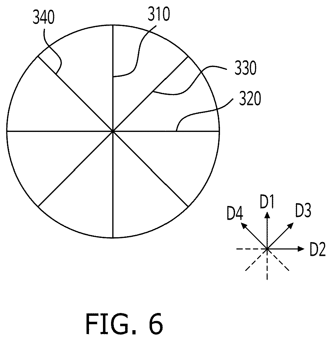

FIG. 6 is a plan view illustrating an example of a first vent portion according to an embodiment of the present invention.

Referring to FIG. 6, in an embodiment, the first vent portion may include a first notch 310 extending in a first direction (D1), and a second notch 320 extending in a second direction (D2) perpendicular to the first direction (D1). The first vent portion may further include a third notch 330 extending in a third direction (D3) between the first direction (D1) and the second direction (D2), and a fourth notch 340 extending in a fourth direction (D4) between the first direction (D1) and the second direction (D2). The fourth direction (D4) may be located on the opposite side of the third direction (D3) with respect to the first direction (D1) and the second direction (D2). For example, the angle between adjacent notches may be 45 degrees, but is not limited thereto, such that the angles between D1, D2, D3, and D4 may be more or less than 45 degrees. As the number of notches in the first vent portion increases compared to the example of FIG. 5, the fracture pressure of the first vent portion may be lower.

Although FIG. 6 shows four notches, it is not limited thereto, and additional notches may be included in the first vent portion.

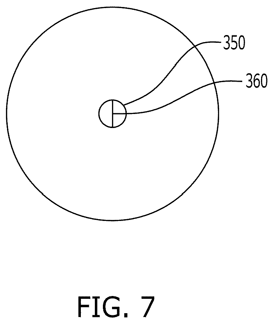

FIG. 7 is a plan view illustrating an example of a first vent portion according to an embodiment of the present invention.

Referring to FIG. 7, in an embodiment, the first vent portion may have a fifth notch 350 having a shape corresponding to the shape of the first vent portion and smaller than or equal to the outermost boundary of the first vent portion, and a sixth notch 360 crossing the interior of the fifth notch 350. The sixth notch 360 may cross the interior of the fifth notch 350 in an arbitrary direction (for example, the first direction (D1) of FIG. 5).

When the fifth notch 350 has the same shape as the outermost boundary of the first vent portion, an additional design for robust fixing of the first vent portion inside the sensor connection portion may be provided.

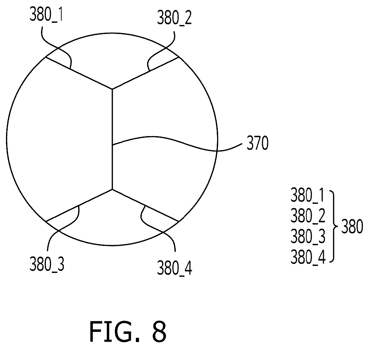

FIG. 8 is a plan view illustrating an example of a first vent portion according to an embodiment of the present invention.

Referring to FIG. 8, in an embodiment, the first vent portion may include a seventh notch 370 extending in an arbitrary direction (for example, the first direction (D1) in FIG. 5) and spaced apart from the outermost boundary of the first vent portion, and an eighth notch 380 extending from at least one end of the seventh notch 370 in a direction toward any one of arbitrary points or a plurality of arbitrary points of the outermost boundary of the first vent portion.

For example, as shown in FIG. 8, the eighth notch 380 may extend from both ends of the seventh notch 370 in directions toward multiple points of the outermost boundary of the first vent portion. Specifically, the eighth notch 380 may extend in a direction branching on both sides from each end of the seventh notch 370, resulting in eight notch portions 380_1, 380_2, 380_3, and 380_4, as illustrated.

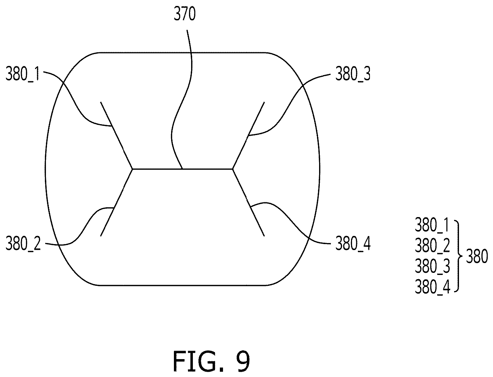

FIG. 9 is a plan view illustrating an example of a first vent portion according to an embodiment of the present invention.

Referring to FIG. 9, in an embodiment, the first vent portion may include a seventh notch 370 extending in an arbitrary direction (for example, the second direction (D2) in FIG. 5) and spaced apart from the outermost boundary of the first vent portion, and an eighth notch 380 extending from at least one end of the seventh notch 370 in a direction toward any one of arbitrary points or a plurality of arbitrary points of the outermost boundary of the first vent portion, and extending up to a point spaced apart from the outermost boundary of the first vent portion.

For example, as shown in FIG. 9, the eighth notch 380 may extend from both ends of the seventh notch 370 in directions toward multiple points of the outermost boundary of the first vent portion up to points spaced apart from the outermost boundary of the first vent portion. Specifically, the eighth notch 380 may include notches 380_1 to 380_4 extending in directions branching to both sides from each end of the seventh notch 370, and extending up to points spaced apart from the outermost boundary of the first vent portion.

As described above with reference to FIGS. 5-9, the fracture pressure of the first vent portion may be adjusted by changing the shape and number of the notches of the first vent portion. The fracture pressure may refer to the threshold at which the vent operates to release gas when the internal gas pressure of the secondary battery exceeds a certain level, thereby preventing explosion or damage to the secondary battery.

In an embodiment, the fracture pressure of the first vent portion (for example, 130 in FIG. 1) may be lower than the fracture pressure of the second vent portion (for example, 126 in FIG. 1). As a result, after connecting the gas pressure measurement sensor to the sensor connection portion (for example, 124 in FIG. 1), the first vent portion may be easily opened so that gas pressure measurement becomes possible.

In an embodiment, the fracture pressure of the first vent portion may be greater than 0 and less than or equal to 0.1 kgf/cm². However, it is not limited thereto, and may vary depending on the structure of the sensor connection portion (for example, presence or absence of a cap) and the design purpose of the battery.

## Claims

1. A secondary battery (100) comprising:
an electrode assembly comprising:
a first electrode;
a second electrode; and
a separator interposed between the first electrode and the second electrode;
a case (110) accommodating the electrode assembly therein, the case (110) having an opened surface;
a cap plate (120) sealing the opened surface of the case (110);
a sensor connection portion (124) located on the cap plate (120), the sensor connection portion (124) configured to be connected to an external gas pressure measurement sensor (200); and
a first vent portion (130) located inside the sensor connection portion (124).

2. The secondary battery (100) according to claim 1, wherein the sensor connection portion (124) penetrates the cap plate (120) and the sensor connection portion (124) extends at least from an upper region of the cap plate (120) to a lower region of the cap plate (120).

3. The secondary battery (100) according to claim 2, wherein the first vent portion (130) is located at the upper region of the cap plate (120) inside the sensor connection portion (124).

4. The secondary battery (100) according to claim 2, wherein the first vent portion (130) is located at the lower region of the cap plate (120) inside the sensor connection portion (124).

5. The secondary battery (100) according to claim 2, wherein the first vent portion (130) is located at a region corresponding to the cap plate (120) inside the sensor connection portion (124).

6. The secondary battery (100) according to any one of claims 1 to 5, further comprising:
a first electrode terminal (122_1) located on the cap plate (120), the first electrode terminal (122_1) connected to the first electrode; and
a second electrode terminal (122_2) located on the cap plate (120), the second electrode terminal (122_2) connected to the second electrode,
wherein the sensor connection portion (124) is located between the first electrode terminal (122_1) and the second electrode terminal (122_2).

7. The secondary battery (100) according to claim 6, further comprising:
a second vent portion (126) located on the cap plate (120) between the first electrode terminal (122_1) and the second electrode terminal (122_2),
wherein the sensor connection portion (124) is located between either: a) the second vent portion (126) and the first electrode terminal (122_1) or b) between the second vent portion (126) and the second electrode terminal (122_2).

8. The secondary battery (100) according to claim 7, further comprising an electrolyte inlet (128) located in the cap plate (120) either 1) between the first electrode terminal (122_1) and the second vent portion (126), or 2) between the second electrode terminal (122_2) and the second vent portion (126),
wherein the sensor connection portion (124) is located on an opposite side of the electrolyte inlet (128) relative to the second vent portion (126).

9. The secondary battery (100) according to any one of claims 1 to 8, wherein a shape of an outermost boundary of the first vent portion (130) is any one of a circle, an ellipse, and a polygon.

10. The secondary battery (100) according to any one of claims 1 to 9, wherein the first vent portion (130) comprises:
a first notch (310) extending in a first direction (D1); and
a second notch (320) extending in a second direction (D2) substantially perpendicular to the first direction (D1); and
wherein the first notch (310) and the second notch (320) intersect each other.

11. The secondary battery (100) according to claim 10, wherein the first vent portion (130) further comprises:
a third notch (330) extending in a third direction (D3), the third direction (D3) being between the first direction (D1) and the second direction (D2), and
a fourth notch (340) extending in a fourth direction (D4), the fourth direction (D4) being between the first direction (D1) and the second direction, and
the fourth direction (D4) is located on an opposite side of the third direction (D3) with respect to the first direction (D1) and the second direction (D2).

12. The secondary battery (100) according to any one of claims 1 to 11, wherein the first vent portion (130) comprises:
a fifth notch (350) having a shape corresponding to a shape of the first vent portion (130), the fifth notch (350) being smaller than or equal to an outermost boundary of the first vent portion (130), and
a sixth notch (360) crossing an interior of the fifth notch (350).

13. The secondary battery (100) according to any one of claims 1 to 12, wherein the first vent portion (130) comprises:
a seventh notch (370) extending in an arbitrary direction, the seventh notch (370) spaced apart from the outermost boundary of the first vent portion (130), and
a eighth notch (380) extending from at least one end of the seventh notch (370) in a direction toward any one of arbitrary points or a plurality of arbitrary points of the outermost boundary of the first vent portion (130).

14. The secondary battery (100) according to any one of claims 1 to 13, further comprises:
a second vent portion (126) located on the cap plate (120),
wherein a fracture pressure of the first vent portion (130) is lower than a fracture pressure of the second vent portion (126).

15. The secondary battery (100) according to any one of claims 1 to 14, wherein a fracture pressure of the first vent portion (130) is greater than 0 and less than or equal to 0.1 kgf/cm².
